# EUROPEAN PATENT SPECIFICATION

(11) **EP 1 837 727 B1**
(45) Date of publication and mention of the grant of the patent: **16.01.2008**
(21) Application number: 06005635.5
(22) Date of filing: 20.03.2006
(51) Int. Cl.: G05B 19/414

(54) **Self-synchronous AC servo system for high-speed serial communication**
Autosynchrones AC-Servosystem für serielle Hochgeschwindigkeitskommunikation
Système asservi CA autosynchrone pour communication série grande vitesse

(43) Date of publication of application: 26.09.2007
(73) Proprietor: Delta Electronics, Inc., Taoyuan Hsien 333 (TW)
(72) Inventor: Tsai C.S., Taoyuan Hsien 333 (TW)
(74) Representative: TER MEER - STEINMEISTER & PARTNER GbR

(56) References cited:
- EP-A- 0 371 143
- DE-A1- 10 312 379
- DE-A1- 10 345 231
- DE-A1- 19 539 519

## Description

### BACKGROUND OF THE INVENTION

### 1. Field of the Invention

The present invention relates to an AC servo system, especially to a self-synchronous AC servo system for high-speed serial communication,

### 2. Description of Prior Art

The current multiple axes control architecture is centralized control. The multiple axes control architecture with centralized control includes an upper controller to control servo drive for linear/circular multiple axes interpolation by following wiring or high-speed communication.

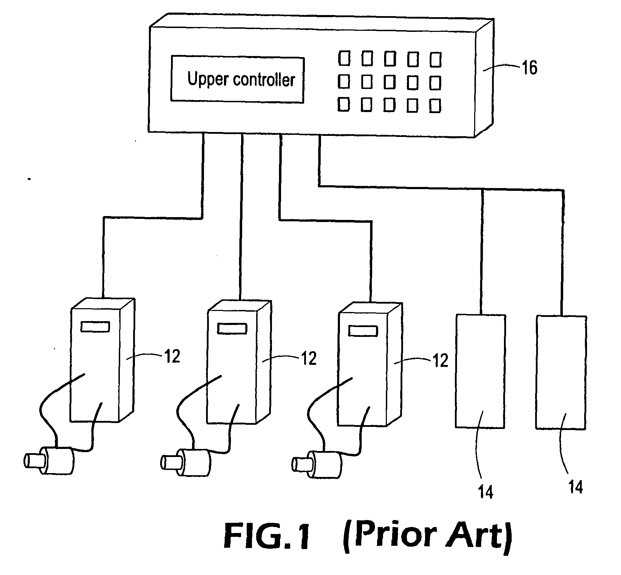

Fig. 1 shows a schematic diagram of a prior art centralized control system for multiple axes control. The command and I/O 14 control of the multiple axes interpolation for the servo drive 12 is dealt by the upper controller 16. The signal from each axis is connected to the servo drive 12 through conventional wiring. However, the above scheme has following advantages:
1. High cost: The performance of the upper controller 16 is demanding for more axes. The CPU (now shown) of the upper controller 16 is also requested with higher grade.
2. Limited axes number: The axes number of the servo drive 12 is limited by CPU grade and hardware channel number.
3. Complicated wiring: There are complicated wiring of A/D, D/A, command pulse, feedback pulse, digital I/O signals between upper controller 16 and servo drive 12.
4. Insufficient resolution: The command signal is limited by physical signals such as A/D conversion resolution and pulse frequency.
5. Environment interference: The analog signal tends to be interfered in factory environment.
6. Maintenance problem: The wires are more complicated when the axes number of the servo drive 12 is large. The inspection and maintenance are troublesome.

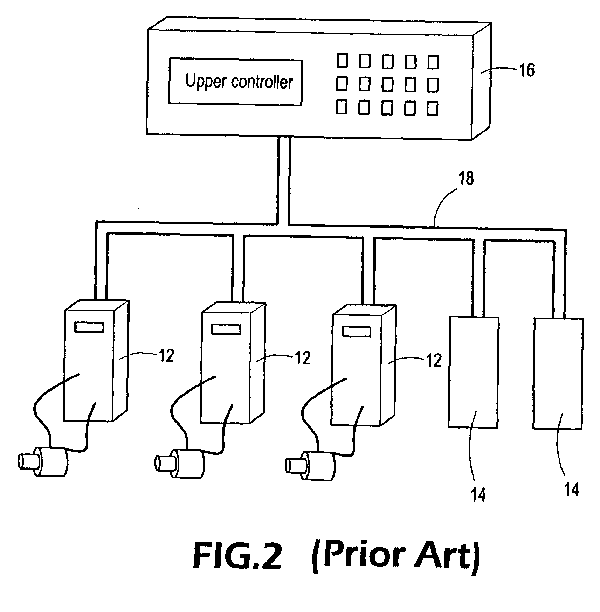

Fig. 2 shows the schematic diagram of a prior art control system for multiple axes control with high speed communication, where the wire between the upper controller 16 and servo drive 12 in Fig. 1 is replaced by a high speed communication network 18. The high speed communication network 18 has simple wiring and can prevent interference and enhance resolution. The servo drive 12 does not have interpolation ability for path commands such that the upper controller 16 needs to send intense interpolation commands (more than 1KHz) to each axis to achieve path denseness. However, the network is also used for sending feedback position, current and I/O status besides position and speed commands. The data throughput is high when the axes number is high and the status of each axis needs monitoring. The bandwidth of the high speed communication network 18 needs at least 10MHz, which induces following results.
1. Interference prone: High speed communication is more sensitive to noise and high-standard communication hardware such as optical fiber is needed in factory environment.
2. Insufficient synchronism: The serial command is difficult to transit to each axis in synchronism.

DE 103 12 379 A1 describes a drive-system including a master-drive, at least one assigned slave-drive and a central control unit, wherein each drive includes data processing and storing means. The slave-drives are synchronized based on a revolution and/or angle of the master-drive. Based on operation values of the master-drive, a synchronization function is determined for each slave-drive. The central control unit provides a specific set of commands, wherein a set of command includes predetermined moves of the drive, e.g. velocity commands or absolute or relative positioning commands and the time for executing the command. The control means of the drives receive a system time from the central control unit for generating a time base, wherein the system time is synchronized by using the field bus.

EP 0 371 143 describes a method of numerical control of a plurality of axes to be controlled in synchronism from an NC program during automatic operation. A wait instruction is inserted in the NC program corresponding to moving parts of a predetermined axis constitution, and a synchronizing axis instruction is inserted in the main NC program to designate a plurality of axes that are to be controlled in synchronism. When a wait instruction is detected in automatic operation, numerical control units that execute the NC programs set a flag to the memory and discontinue the machine operation. After having confirmed that the flags correspond to the axes designated by the synchronizing axis instruction are set, the main numerical control unit causes the numerical controller to start the machine operation.

DE 195 39 519 A1 describes a drive control command unit and a synchronous control system for a plurality of driving units. The control unit of a drive includes a operation clock generator generating a clock and an interruption generator, which provides for each cycle of the operation clock an interruption signal. Based on the number of the stations, it is determined whether the control unit of a drive is operated as a master or a slave, wherein a synchronous clock signal transmission unit is provided, which is only operated when the unit is used a master. The synchronous clock signal transmission unit provides a synchronous clock signal on the basis of the operation clock. Further, there are synchronization control units, which are only operative, if the unit is used as a slave, wherein a synchronization start signal is provided on the basis of a failure state signal, indicating a state of the synchronization operation and depending on the synchronization clock signal, which is received from the master-drive control unit.

DE 102 45 231 A1 describes a coordination method for at least one slave-drive by use of a master control unit. The slave control unit and the master control unit are synchronized independently from each other on an operation clock of a bus system, which is used for communicating between each other. At the transmission times, the master control unit transmits over the bus system master times and associated control commands to the slave control unit. A slave control unit determines based on the master times and the received control commands its slave times and the associated slave control commands. The slave control commands are outputted at the slave times to the slave-drive.

### SUMMARY OF THE INVENTION

The present invention is intended to provide self-synchronous AC servo system for high-speed serial communication, such that the high-speed serial communication does not need synchronization protocol. The wiring and the cost can be saved.

### The object is solved by the features of the independent claims.

Accordingly, the present invention provides a self-synchronous AC servo system for high-speed serial communication, the system used for multiple axes control and comprising: a transmission line; a computer coupled to the transmission line; a master axis drive coupled to the transmission line; a master axis motor coupled to the master axis drive; a plurality of slave axis drives coupled to the transmission line; and a plurality of slave axis motor coupled to the slave axis drives; wherein the computer sends command to the master axis drive and the slave axis drives through the transmission line, the master axis drive and the slave axis drives sending interrupt request to the computer after receiving command from the computer; wherein each drive judging whether or not the command is for itself; the drives storing a plurality of commands from the computer in queue; the drives driving the master axis drive and the slave axis drives in synchronism by the commands stored in queue according to a synchronous timing clock.

Accordingly, the present invention provides a method for operating a self-synchronous AC servo system for high-speed serial communication, the method comprising: a computer sending command to a master axis drive and a plurality of slave axis drives through a transmission line; the master axis drive and the slave axis drives sending interrupt requests to the computer through the transmission line after receiving command; the drive judging whether the command is for itself;
the drive stores a plurality of commands of computer in queue; and the drive controls the master axis drive and the slave axis drives by the commands stored in queue and according to a synchronous timing clock.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a schematic diagram of a prior art centralized control system for multiple axes control.
Fig. 2 shows the schematic diagram of a prior art control system for multiple axes control with high speed communication.
Fig 3 shows a block diagram of the self-synchronous AC servo system for high-speed serial communication of the present invention.
Fig. 4 shows a serial of commands according to the present invention.
Fig. 5 is schematic diagram showing queued data in axis drive.

### DETAILED DESCRIPTION OF THE INVENTION

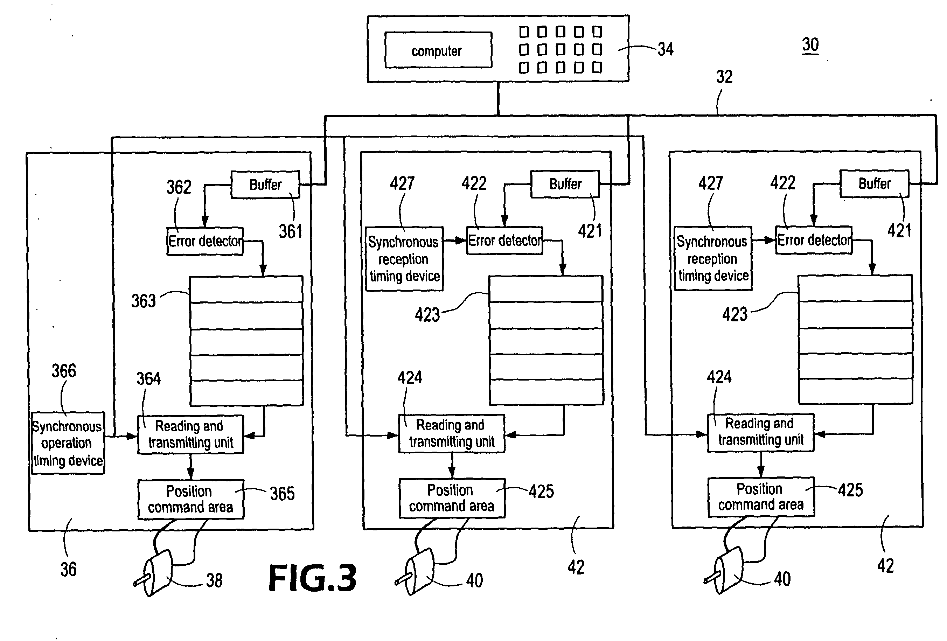

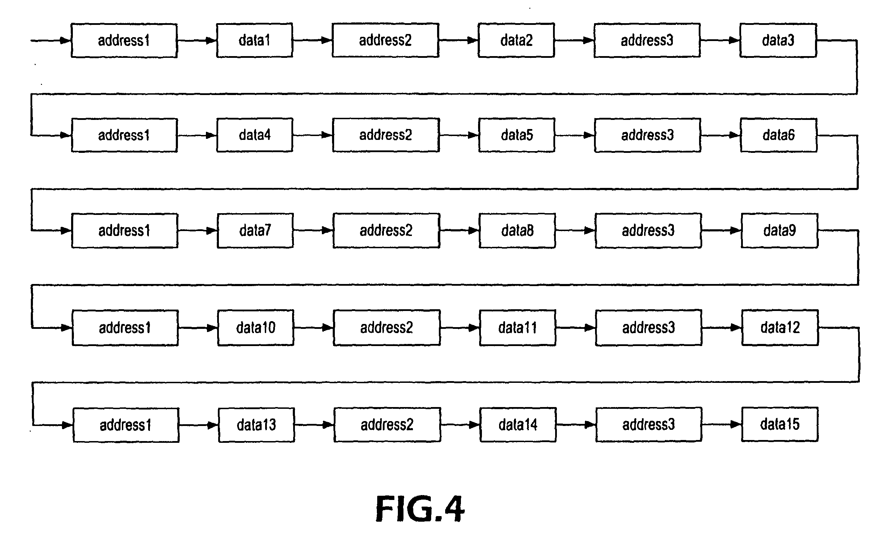

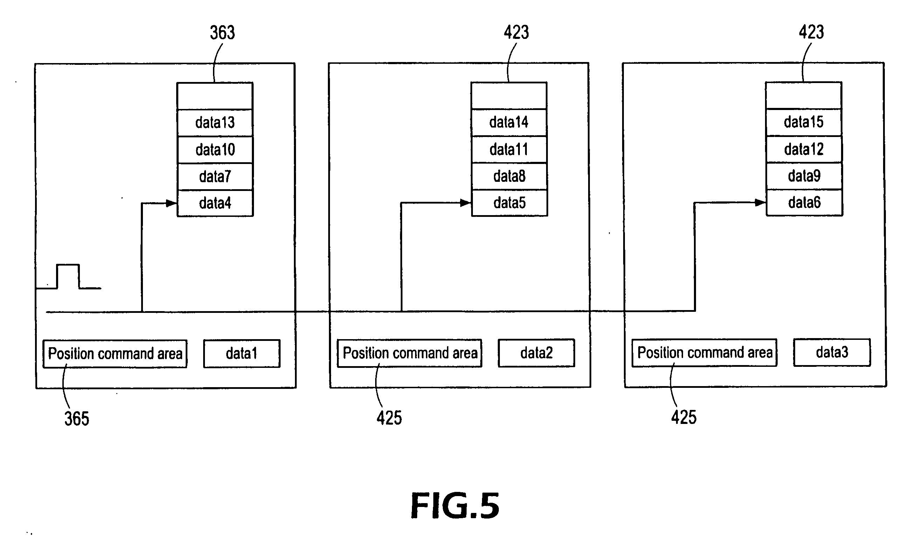

Fig 3 shows a block diagram of the self-synchronous AC servo system for high-speed serial communication of the present invention. Fig. 4 shows a serial of commands according to the present invention. Fig. 5 is schematic diagram showing queued data in axis drive.

As shown in Fig. 3, the self-synchronous AC servo system 30 adopts multiple axes control. The self-synchronous AC servo system 30 comprises a transmission line 32, a computer 34 coupled to the transmission line 32, a master axis drive 36 coupled to the transmission line 32, a master axis motor 38 coupled to the master axis drive 36, a plurality of slave axis drives 42 coupled to the transmission line 32, and a plurality of slave axis motors 40 coupled to the slave axis drives 42. It should be noted that the number of the master axis motor 38 and the slave axis motors 40 is not limited to that shown in Fig. 3. The master axis motor 38 and the slave axis motors 40 are AC servo motors.

The computer 34 issues command to the master axis drive 36 and the slave axis drives 42 through the transmission line 32. As shown in Fig. 4, the first command includes address 1 and data 1; the second command includes address 2 and data 2; the third command includes address 3 and data 3; the forth command includes address 1 and data 4; the fifth command includes address 2 and data 5; the sixth command includes address 3 and data 6 ...etc, where the addresses 1, 2 and 3 are corresponding to the master axis drive 36 and the slave axis drives 42, 42. The master axis drive 36 and the slave axis drives 42 send interrupt requests to the computer 34 through the transmission line 32 after receiving commands. The master axis drive 36 and the slave axis drives 42 will judge whether the command is for itself.

The master axis drive 36 and the slave axis drives 42 store command of the computer 32 in queues. According to the synchronous timing clocks for the master axis drive 36 and the slave axis drives 42, the master axis drive 36 and the slave axis drives 42 send commands stored in queues to drive the master axis motor 38 and the slave axis motors 40 synchronously.

In Fig. 3, the master axis drive 36 includes a buffer 361 receiving command (in the form shown in Fig. 4) of the computer 34 through the transmission line 32. The command includes address information. In the preferred embodiment, address 1 indicates the master axis drive 36 and the data after the address 1 is the data to be sent to the master axis drive 36 (namely the data 1, data 4 etc. in Fig. 4). An error detector 362 detects whether the data in the command received by the buffer is correct and complete. A queue storage unit 363 stores the data in queue, wherein the data is judged to be correct and complete by the error detector 362. A reading and transmitting unit 364 reads the stored data of the queue storage unit 363 and sends the data to a position command area 365. The reading and transmitting unit 364 reads data in the queue storage unit 363 and sends data to the position command area 365 according to synchronous clocks of the synchronous operation timing device 366, which is synchronous with the reading and transmitting unit 424 of the slave axis drive 42.

As shown in Fig. 5, according to the first period of the synchronous operation timing device 366, the reading and transmitting unit 364 of the master axis drive 36 reads data 1 in the queue storage unit 363 and sends the data 1 to the position command area 365. In the same cycle, the reading and transmitting unit 424, 424 of the first and the second slave axis drive 42 read data 2 and data 3 in the queue storage unit 423 and then send the data 2 and data 3 to the position command area 425, 425 of the second slave axis drive 42. The master axis motor 38 is driven according to the data received by the position command area 365.

The slave axis drive 42 includes a buffer 421 to receive command sent from the computer 34 and having format shown in Fig. 4 through the transmission line 32. The command includes address information. In this preferred embodiment, the addresses 2 and 3 indicate the first and the second slave axis drives 42 and 42. The data after the addresses 2 and 3 indicate the data to be sent to the first and the second slave axis drives 42 and 42 (namely, the data 2, data 3, data 4, data 5, data 6 ... in Fig. 4). An error detector 422 detects whether the data in the command received by the buffer is correct and complete. The error detector 422 detects data in synchronism with the timing clock provided by the synchronous reception timing unit 427 and in synchronism with the slave axis drive 42.

As shown in Fig. 5, the reading and transmitting unit 424 works according to the timing clock of the synchronous operation timing device 366 of the master axis drive 36 and in synchronism with the reading and transmitting unit 364 of the master axis drive 36. The reading and transmitting unit 424 read the data stored in the queue storage unit 423 and then send the data to the position command area 425. As shown in Fig. 5, according to the first clock of the synchronous operation timing unit 366, the reading and transmitting unit 424, 424 of the first and the second slave axis drive 42, 42 read the data 2 and data 3 in the queue storage unit 423, 423 and then send the data 2 and data 3 to the position command area 425, 425. In the same cycle, the reading and transmitting unit 364 of the master axis drive 36 reads the data 1 in the queue storage unit 363 and then sends the data 1 to the position command area 365. The slave axis motor 42 is driven according to the data received by the position command area 425.

As can be seen from above description, the data in the queue storage unit of each axis drive is triggered according to the timing clock of the synchronous timing unit of the master axis drive to send to each position command area. Therefore, each axis drive can be automatically synchronized without using the synchronous command of the computer. The error tolerance for high-speed serial communication is enhanced by queued data and the automatic synchronism.

The computer 34 sends a series of commands such that each axis drive 36, 42 will inform the computer 34 to stop sending command when the data in the queue storage unit 363, 423 is full. The axis drive 36, 42 will automatically operate the data sent from the queue storage unit 363, 423 according to the timing clock sent from the synchronous operation timing unit 366. When the remaining data in the queue storage unit 363, 423 reaches a predetermined amount, the axis drive 36, 42 will ask the computer 34 to send command until the queue storage unit 363, 423 has full data. When the computer 34 sends command and the queue storage unit 363, 423 still sends data, the frequency of the timing clock of the synchronous operation timing unit 366 is reduced if the remaining data in the queue storage unit 363, 423 reaches a predetermined amount. Therefore, the reading speed and the sending speed of the reading and transmitting unit 364, 424 is reduced. In other word, the axis motor has slow trace, but the path is not changed. Therefore, the problem of stop operation of the axis motor 38, 40 due to over low data rate in the queue storage unit 363, 423 can be solved when the error rate of the high speed serial communicating is high.

To sum up, the present invention has the advantage of error tolerance for high speed serial communication. Each axis drive has individual synchronism such that the high speed serial communication does not need synchronization protocol. The wiring and the cost can be saved.

## Claims

1. A self-synchronous AC servo system for high-speed serial communication, the system used for multiple axes control and comprising:
a transmission line (32);
a computer (34) coupled to the transmission line (32);
a master axis drive (36) coupled to the transmission line (32);
a master axis motor (38) coupled to the master axis drive (36);
a plurality of slave axis drives (42) coupled to the transmission line (32); and
a plurality of slave axis motor (40) coupled to the slave axis drives (42);
**characterized in that** the computer (34) is adapted to send commands to the master axis drive (36) and the slave axis drives (42) through the transmission line (32), wherein the master axis drive (36) and the slave axis drives (42) are adapted to send interrupt requests to the computer (34) after receiving a command from the computer (34),
wherein each drive is adapted to judge whether or not the command is for itself; and
the drives are adapted to store a plurality of commands from the computer (34) in a queue; and
the drives are adapted to drive the master axis motor (38) and the slave axis motors (40) in synchronism by the commands stored in queue according to a synchronous timing clock.

2. The system as in claim 1, wherein the master axis drive (36) comprises
a buffer (361) adapted to receive a command from the computer (34) through the transmission line (32);
means for detecting an error (362) adapted to detect whether the data received by the buffer (361) is correct and complete;
means for queuing (363) adapted to store the data judged to be correct and complete by the means for detecting error (362) in queue;
means for reading and transmitting (364) adapted to read the data stored in queue by the means for queuing (363) and then transmitting the data;
means for synchronous operation timing clock (366) adapted to generate a synchronous operation timing clock, wherein the means for reading and transmitting (364) are adapted to transmit the data according to the synchronous operation timing clock; and
a position command area (365), wherein the means for reading and transmitting (364) are adapted to transmit data to the position command area (365) and the position command area (365) is adapted to drive the master axis motor (38) according to the data of the position command area (365);
the slave axis drive (42) comprising:
a buffer (421) adapted to receive command from the computer (34) through the transmission line (32);
means for detecting error (422) adapted to detect whether the data received by the buffer (421) is correct and complete;
means for synchronous reception timing clock (427) adapted to generate a synchronous reception timing clock, wherein the means for detecting error (422) detects the data according to the synchronous reception timing clock;
means for queuing (423) adapted to store the data judged to be correct and complete by the means for detecting error (422) in queue;
means for reading and transmitting (424) adapted to read the data stored in queue by the means for queuing according to the synchronous operation timing clock and then transmitting the data;
a position command area (425), wherein the means for reading and transmitting (424) are adapted to transmit data to the position command area (425) and the position command area (425) adapted to drive the slave axis motor (40) according to the data of the position command area.

3. The system as in claim 1, wherein the computer (34) is adapted to send a series of commands to fill the means for queuing (363, 423); and
the drive (36, 42) is adapted to inform the computer to stop sending commands when the means for queuing (363, 423) is full; and
the drive (36, 42) is adapted to ask the computer (34) to resend commands when a remaining data amount in the means for queuing (363, 423) reaches a predetermined amount; and
the means for synchronous operation timing clock (366) are adapted to slow the synchronous operation timing clock when a remaining data amount in the means for queuing (363) reaches a predetermined minimum, whereby operation speed of the means for reading and transmitting (364) is slower.

4. The system as in claim 1, wherein the master axis motor (38) and the slave axis motor (40) are AC servo motors.

5. A method for operating a self-synchronous AC servo system for high-speed serial communication, comprising the steps of:
sending at least one command from a computer (34) to a master axis drive (36) and
a plurality of slave axis drives (42) through a transmission line (32);
**characterized by**
sending interrupt requests by the master axis drive (36) and the slave axis drives (42) to the computer (34) through the transmission line (32) after receiving a command;
judging by the drive (36, 42) whether the command is for itself;
storing by the drive (36, 42) a plurality of commands of the computer in a queue; and
controlling by the drives (36, 42) the master axis motor (38) and the slave axis motor (40) by the commands stored in queue and according to a synchronous operation timing clock.

6. The method as in claim 5, wherein the system further comprising a buffer (361) of the master axis drive (36) and a buffer (421) of the slave axis drive (42) receiving commands of the computer (34) through the transmission line (32), the method further comprises the steps of:
- detecting whether the data received by the buffer (361) is correct and complete using means for detecting an error (362) of the master axis drive (36);
- according to a synchronous reception clock, using means for detecting an error (422) of the slave axis drive (42) to detect whether the data received by the buffer (421) of the slave axis drive (42) is correct and complete;
- using means for queuing (363, 423) of the master axis drive (36) and the slave axis drive (42) to store the data judged to be correct and complete by the means for detecting error (362, 422) in queue;
- according to the synchronous reception clock, using means for reading and transmitting (364, 424) of the master axis drive (36) and the slave axis drive (42) to read the data stored in the queue by the means for queuing (363, 423) and then to transmit the data to a position command area (365, 425) of the master axis drive (36) and the slave axis drive (42); and
- driving the master axis motor (38) and the slave axis motor (40) according to the data sent to the position command area (365, 425) of the master axis drive (36) and the slave axis drive (42).

7. The method as in claim 5, further comprising
- sending by the computer (34) a series of commands to fill the means for queuing (363, 423);
- informing the computer (34) to stop sending command when the means for queuing (363, 423) is full by the drives (36, 42);
- asking by the drives (36, 42) the computer (34) to resend commands when a remaining data amount in the means for queuing (363, 423) reaches a predetermined amount;
- slowing the synchronous operation timing clock by the means for synchronous operation timing clock (366) when a remaining data amount in the means for queuing (363) reaches a predetermined minimum.

8. The method as in claim 5, wherein the master axis motor (38) and the slave axis motor (40) are AC servo motors.

## Patentansprüche

1. Autosynchrones Wechselspannungs-Servosystem für eine serielle Hochgeschwindigkeitskommunikation, wobei das System für eine mehrachsige Steuerung verwendet wird und umfasst:
eine Übertragungsleitung (32);
einen Computer (34), der mit der Übertragungsleitung (32) gekoppelt ist;
eine Master-Achsenansteuerung (36), die mit der Übertragungsleitung (32) gekoppelt ist;
einen Master-Achsenmotor (38), der mit der Master-Achsenansteuerung (36) gekoppelt ist;
mehrere Slave-Achsenansteuerungen (42), die mit der Übertragungsleitung (32) gekoppelt sind; und
mehrere Slave-Achsenmotoren (40), die mit den Slave-Achsenansteuerungen (42) gekoppelt sind;
**dadurch gekennzeichnet, dass** der Computer (34) ausgelegt ist, um Befehle zu der Master-Achsenansteuerung (36) und den Slave-Achsenansteuerungen (42) über die Übertragungsleitung (32) zu senden, wobei die Master-Achsenansteuerung (36) und die Slave-Achsenansteuerungen (42) ausgelegt sind, um Unterbrechungsanforderungen zu dem Computer (34) zu senden, nachdem sie einen Befehl von dem Computer (34) empfangen haben;
wobei jede Ansteuerung ausgelegt ist, um zu beurteilen, ob der Befehl für sie bestimmt ist oder nicht;
die Ansteuerungen ausgelegt sind, um mehrere Befehle von dem Computer (34) in einer Warteschlange zu speichern; und
die Ansteuerungen ausgelegt sind, um den Master-Achsenmotor (38) und die Slave-Achsenmotoren (40) durch die in der Warteschlange gespeicherten Befehle in Übereinstimmung mit einem synchronen Zeittakt synchron anzusteuern.

2. System nach Anspruch 1, wobei die Master-Achsenansteuerung (36) umfasst:
einen Puffer (361), der ausgelegt ist, um einen Befehl von dem Computer (34) über die Übertragungsleitung (32) zu empfangen;
Mittel (362) zum Erfassen eines Fehlers, die ausgelegt sind, um zu erfassen, ob von dem Puffer (361) empfangene Daten korrekt und vollständig sind;
Mittel (363) zur Warteschlangenbildung, die ausgelegt sind, um die Daten, die von den Fehlererfassungsmitteln (362) als korrekt und vollständig beurteilt werden, in einer Warteschlange zu speichern;
Mittel (364) zum Lesen und Übertragen, die ausgelegt sind, um die mittels der Warteschlangenbildungsmittel (363) in einer Warteschlange gespeicherten Daten zu lesen und dann die Daten zu übertragen;
Mittel (366) für einen Synchronbetrieb-Zeittakt, die ausgelegt sind, um einen Synchronbetrieb-Zeittakt zu erzeugen, wobei die Lese- und Übertragungsmittel (364) ausgelegt sind, um die Daten in Übereinstimmung mit dem Synchronbetrieb-Zeittakt zu übertragen; und
einen Positionsbefehlsbereich (365), wobei die Lese- und Übertragungsmittel (364) ausgelegt sind, um Daten an den Positionsbefehlsbereich (365) zu übertragen, und der Positionsbefehlsbereich (365) ausgelegt ist, um den Master-Achsenmotor (38) in Übereinstimmung mit den Daten des Positionsbefehlsbereichs (365) anzutreiben;
wobei die Slave-Achsenansteuerung (42) umfasst:
einen Puffer (421), der ausgelegt ist, um einen Befehl von dem Computer (34) über die Übertragungsleitung (32) zu empfangen;
Mittel (422) zum Erfassen eines Fehlers, die ausgelegt sind, um zu erfassen, ob die von dem Puffer (421) empfangenen Daten korrekt und vollständig sind;
Mittel (427) für einen Synchronempfang-Zeittakt, die ausgelegt sind, um einen Synchronempfang-Zeittakt zu erzeugen, wobei die Fehlererfassungsmittel (422) die Daten in Übereinstimmung mit dem Synchronempfang-Zeittakt erfassen;
Mittel (423) zur Warteschlangenbildung, die ausgelegt sind, um die mittels der Fehlererfassungsmittel (422) als korrekt und vollständig beurteilten Daten in einer Warteschlange zu speichern;
Mittel (424) zum Lesen und Übertragen, die ausgelegt sind, um die mittels der Warteschlangenbildungsmittel in der Warteschlange gespeicherten Daten in Übereinstimmung mit dem Synchronbetrieb-Zeittakt zu lesen und dann die Daten zu übertragen;
einen Positionsbefehlsbereich (425), wobei die Mittel (424) zum Lesen und Übertragen ausgelegt sind, um Daten an den Positionsbefehlsbereich (425) zu übertragen, und der Positionsbefehlsbereich (425) ausgelegt ist, um den Slave-Achsenmotor (40) in Übereinstimmung mit den Daten des Positionsbefehlsbereichs anzutreiben.

3. System nach Anspruch 1, wobei der Computer (34) ausgelegt ist, um eine Reihe von Befehlen zu senden, um die Warteschlangenbildungsmittel (363, 423) zu füllen; und
die Ansteuerung (36; 42) ausgelegt ist, um dem Computer zu melden, das Senden von Befehlen zu beenden, wenn die Warteschlangenbildungsmittel (363; 423) voll sind; und
die Ansteuerung (36; 42) ausgelegt ist, um den Computer (34) aufzufordern, Befehle erneut zu senden, wenn eine verbleibende Datenmenge in den Warteschlangenbildungsmitteln (363, 423) eine vorgegebene Menge erreicht; und
die Mittel (366) für den Synchronbetrieb-Zeittakt ausgelegt sind, um den Synchronbetrieb-Zeittakt zu verlangsamen, wenn eine verbleibende Datenmenge in den Warteschlangenbildungsmitteln (363) ein vorgegebenes Minimum erreicht, wodurch die Betriebsgeschwindigkeit der Lese- und Übertragungsmittel (364) langsamer wird.

4. System nach Anspruch 1, wobei der Master-Achsenmotor (38) und der Slave-Achsenmotor (40) Wechselspannungs-Servomotoren sind.

5. Verfahren zum Betreiben eines autosynchronen Wechselspannungs-Servosystems für eine serielle Hochgeschwindigkeitskommunikation, das die folgenden Schritte umfasst:
Senden wenigstens eines Befehls von einem Computer (34) zu einer Master-Achsenansteuerung (36) und zu mehreren Slave-Achsenansteuerungen (42) über eine Übertragungsleitung;
**gekennzeichnet durch**
Senden von Unterbrechungsanforderungen **durch** die Master-Achsenansteuerung (36) und die Slave-Achsenansteuerungen (42) zu dem Computer (34) über die Übertragungsleitung (32), nachdem ein Befehl empfangen worden ist;
Beurteilen **durch** die Ansteuerung (36, 42), ob der Befehl für sie selbst bestimmt ist;
Speichern mehrerer Befehle des Computers in einer Warteschlange **durch** die Ansteuerung (36, 42); und
Steuern des Master-Achsenmotors (38) und des Slave-Achsenmotors (40) durch in der Warteschlange gespeicherte Befehle und in Übereinstimmung mit einem Synchronbetrieb-Zeittakt **durch** die Ansteuerungen (36, 42).

6. Verfahren nach Anspruch 5, wobei das System ferner einen Puffer (361) der Master-Achsenansteuerung (36) und einen Puffer (421) der Slave-Achsenansteuerung (42) umfasst, die Befehle des Computers (34) über die Übertragungsleitung (32) empfangen, wobei das Verfahren ferner die folgenden Schritte umfasst:
- Erfassen, ob die von dem Puffer (361) empfangenen Daten korrekt und vollständig sind, unter Verwendung von Mitteln (362) zum Erfassen eines Fehlers der Master-Achsenansteuerung (36);
- in Übereinstimmung mit einem Synchronempfangstakt Verwenden von Mitteln (422) zum Erfassen eines Fehlers der Slave-Achsenansteuerung (42), um zu erfassen, ob die von dem Puffer (421) der Slave-Achsenansteuerung (42) empfangenen Daten korrekt und vollständig sind;
- Verwenden von Warteschlangenbildungsmitteln (363, 423) der Master-Achsenansteuerung (36) und der Slave-Achsenansteuerung (42), um die Daten, die durch die Fehlererfassungsmittel (362, 422) als korrekt und vollständig beurteilt werden, in einer Warteschlange zu speichern;
- in Übereinstimmung mit dem Synchronempfangstakt Verwenden von Lese- und Übertragungsmitteln (364, 424) der Master-Achsenansteuerung (36) und der Slave-Achsenansteuerung (42), um in der Warteschlange mittels der Warteschlangenbildungsmittel (363, 423) gespeicherte Daten zu lesen und dann die Daten an einen Positionsbefehlsbereich (365, 425) der Master-Achsenansteuerung (36) und der Slave-Achsenansteuerung (42) zu übertragen; und
- Ansteuern des Master-Achsenmotors (38) und des Slave-Achsenmotors (40) in Übereinstimmung mit den Daten, die zu dem Positionsbefehlsbereich (365, 425) der Master-Achsenansteuerung (36) und der Slave-Achsenansteuerung (42) gesendet werden.

7. Verfahren nach Anspruch 5, das ferner umfasst:
- Senden einer Reihe von Befehlen durch den Computer (34), um die Warteschlangenbildungsmittel (363, 423) zu füllen;
- dem Computer (34) durch die Ansteuerungen (36, 42) melden, dass er das Senden eines Befehls anhält, wenn die Warteschlangenbildungsmittel (363, 423) voll sind;
- Auffordern des Computers (34) durch die Ansteuerungen (36, 42), Befehle erneut zu senden, wenn eine verbleibende Datenmenge in den Warteschlangenbildungsmitteln (363, 423) eine vorgegebene Menge erreicht;
- Verlangsamen des Synchronbetrieb-Zeittakts durch die Mittel (366) für den Synchronbetrieb-Zeittakt, wenn eine verbleibende Datenmenge in den Warteschlangenbildungsmitteln (363) ein vorgegebenes Minimum erreicht.

8. Verfahren nach Anspruch 5, wobei der Master-Achsenmotor (38) und der Slave-Achsenmotor (40) Wechselspannungs-Servomotoren sind.

## Revendications

1. Système asservi à courant alternatif synchrone autopiloté pour communication série à haute vitesse utilisé pour le contrôle d'axes multiples et comprenant :
une ligne de transmission (32) ;
un ordinateur (34) connecté à la ligne de transmission (32) ;
un pilote d'axe maître (36) connecté à la ligne de transmission (32) ;
un moteur d'axe maître (38) connecté au pilote d'axe maître (36) ;
une pluralité de pilotes d'axe esclave (42) connectés à la ligne de transmission (32) ; et
une pluralité de moteurs d'axe esclave (40) connectés aux pilotes d'axe esclave (42) ;
**caractérisé en ce que** l'ordinateur (34) est adapté pour envoyer des commandes au pilote d'axe maître (36) et aux pilotes d'axe esclave (42) via la ligne de transmission (32), dans lequel le pilote d'axe maître (36) et les pilotes d'axe esclave (42) sont adaptés pour envoyer des interruptions matérielles à l'ordinateur (34) après réception d'une commande de l'ordinateur (34),
dans lequel chaque pilote est adapté pour évaluer si la commande lui est ou non destinée ; et
les pilotes sont adaptés pour enregistrer une pluralité de commandes de l'ordinateur (34) dans une file d'attente ; et
les pilotes sont adaptés pour piloter le moteur d'axe maître (38) et les moteurs d'axe esclave (40) de façon synchrone grâce aux commandes enregistrées en file d'attente en fonction d'une horloge de synchronisation.

2. Système selon la revendication 1 dans lequel le pilote d'axe maître (36) comprend :
une mémoire tampon (361) adaptée pour recevoir une commande de l'ordinateur (34) via la ligne de transmission (32) ;
un moyen de détection d'erreur (362) adapté pour détecter si les données reçues par la mémoire tampon (361) sont correctes et complètes ;
un moyen de mise en file d'attente (363) adapté pour enregistrer en file d'attente les données estimées correctes et complètes par le moyen de détection d'erreur (362) ;
des moyens de lecture et de transmission (364) adaptés pour lire les données enregistrées en file d'attente grâce au moyen de mise en file d'attente (363) et pour ensuite transmettre ces données ; un moyen d'horloge de synchronisation de fonctionnement (366) adapté pour générer une signal d'horloge de synchronisation de fonctionnement, dans lequel les moyens de lecture et de transmission (364) sont adaptés pour transmettre les données en fonction du signal d'horloge de synchronisation de fonctionnement ; et
une zone de commande de position (365), dans laquelle les moyens de lecture et de transmission (364) sont adaptés pour transmettre des données vers la zone de commande de position (365) et la zone de commande de position (365) est adaptée pour piloter le moteur d'axe maître (38) en fonction des données de la zone de commande de position (365) ;
le pilote d'axe esclave (42) comprenant :
une mémoire tampon (421) adaptée pour recevoir une commande de l'ordinateur (34) via la ligne de transmission (32) ;
un moyen de détection d'erreur (422) adapté pour détecter si les données reçues par la mémoire tampon (421) sont correctes et complètes ;
un moyen d'horloge de synchronisation de réception (427) adapté pour générer un signal d'horloge de synchronisation de réception, dans lequel le moyen de détection d'erreur (422) détecte les données en fonction du signal d'horloge de synchronisation de réception ;
un moyen de mise en file d'attente (423) adapté pour enregistrer en file d'attente les données estimées correctes et complètes par le moyen de détection d'erreur (422) ;
des moyens de lecture et de transmission (424) adaptés pour lire les données enregistrées en file d'attente par le moyen de mise en file d'attente en fonction du signal d'horloge de synchronisation de fonctionnement et pour ensuite transmettre ces données ;
une zone de commande de position (425) dans laquelle les moyens de lecture et de transmission (424) sont adaptés pour transmettre des données vers la zone de commande de position (425) et la zone de commande de position (425) est adaptée pour piloter le moteur d'axe esclave (40) en fonction des données de la zone de commande de position.

3. Système selon la revendication 1 dans lequel l'ordinateur (34) est adaptée pour envoyer une série de commandes pour remplir le moyen de mise en file d'attente (363, 423) ; et
le pilote (36, 42) est adapté pour commander à l'ordinateur d'arrêter d'envoyer des commandes lorsque le moyen de mise en file d'attente (363, 423) est plein ; et
le pilote (36, 42) est adapté pour demander à l'ordinateur (34) de renvoyer des commandes lorsqu'une quantité de données résiduelle dans le moyen de mise en file d'attente (363, 423) atteint une quantité prédéterminée ; et
Le moyen d'horloge de synchronisation de fonctionnement (366) est adapté pour ralentir l'horloge de synchronisation de fonctionnement lorsqu'une quantité de données résiduelle dans le moyen de mise en file d'attente (363) atteint un minimum prédéterminé, moyennant quoi la vitesse de fonctionnement des moyens de lecture et de transmission (364) diminue.

4. Système selon la revendication 1 dans lequel le moteur d'axe maître (38) et le moteur d'axe esclave (40) sont des servomoteurs à courant alternatif.

5. Procédé de fonctionnement d'un système asservi à courant alternatif synchrone autopiloté pour communication série à haute vitesse comprenant les étapes consistant à :
envoyer au moins une commande depuis un ordinateur (34) à un pilote d'axe maître (36) et à une pluralité de pilotes d'axe esclave (42) via une ligne de transmission (32);
**caractérisé par**
l'envoi d'interruptions matérielles par le pilote d'axe maître (36) et par les pilotes d'axe esclave (42) à l'ordinateur (34) via la ligne de transmission (32) après réception d'une commande ;
l'évaluation par le pilote (36, 42) du fait que la commande lui est ou non destinée ;
l'enregistrement par le pilote (36, 42) d'une pluralité de commandes de l'ordinateur dans une file d'attente ; et
le contrôle par les pilotes (36, 42) du moteur d'axe maître (38) et des moteurs d'axe esclave (40) grâce aux commandes enregistrées en file d'attente et en fonction d'une horloge de synchronisation de fonctionnement.

6. Procédé selon la revendication 5 dans lequel le système comprend en outre une mémoire tampon (361) pour le pilote d'axe maître (36) et une mémoire tampon (421) pour le pilote d'axe esclave (42) recevant des commandes de l'ordinateur (34) via la ligne de transmission (32), le procédé comprenant en outre les étapes consistant à :
- détecter si les données reçues par la mémoire tampon (361) sont correctes et complètes en utilisant un moyen de détection d'erreur (362) du pilote d'axe maître (36) ;
- utiliser, en fonction d'une horloge de synchronisation de réception, un moyen de détection d'erreur (422) du pilote d'axe esclave (42) pour détecter si les données reçues par la mémoire tampon (421) du pilote d'axe esclave (42) sont correctes et complètes ;
- utiliser un moyen de mise en file d'attente (363, 423) du pilote d'axe maître (36) et du pilote d'axe esclave (42) pour enregistrer en file d'attente les données estimées correctes et complètes par le moyen de détection d'erreur (362, 422) ;
- utiliser, en fonction de l'horloge de synchronisation de réception, des moyens de lecture et de transmission (364, 424) du pilote d'axe maître (36) et du pilote d'axe esclave (42) pour lire les données enregistrées en file d'attente par le moyen de mise en file d'attente (363, 423) et transmettre ensuite les données à une zone de commande de position (365, 425) du pilote d'axe maître (36) et du pilote d'axe esclave (42) ; et
- piloter le moteur d'axe maître (38) et le moteur d'axe esclave (40) en fonction des données envoyées à la zone de commande de position (365, 425) du pilote d'axe maître (36) et du pilote d'axe esclave (42).

7. Procédé selon la revendication 5 comprenant en outre les étapes consistant à :
- envoyer au moyen de l'ordinateur (34) une série de commandes pour remplir le moyen de mise en file d'attente (363, 423) ;
- ordonner à l'ordinateur (34) d'arrêter d'envoyer une commande lorsque le moyen de mise en file d'attente (363, 423) est rempli par les pilotes (36, 42) ;
- demander au moyen des pilotes (36, 42) à l'ordinateur (34) de renvoyer des commandes lorsqu'une quantité de données résiduelle dans le moyen de mise en file d'attente (363, 423) atteint une quantité prédéterminée ;
- ralentir l'horloge de synchronisation de fonctionnement par le moyen d'horloge de synchronisation de fonctionnement (366) lorsqu'une quantité de données résiduelle dans le moyen de mise en file d'attente (363) atteint un minimum prédéterminé.

8. Procédé selon la revendication 5 dans lequel le moteur d'axe maître (38) et le moteur d'axe esclave (40) sont des servomoteurs à courant alternatif.
